(19) Europäisches Patentamt
European Patent Office
Office européen des brevets

(11) EP 0 759 535 B1

(12) **EUROPÄISCHE PATENTSCHRIFT**

(45) Veröffentlichungstag und Bekanntmachung des Hinweises auf die Patenterteilung:
**07.11.2001 Patentblatt 2001/45**

(51) Int Cl.⁷: **G01B 7/00**, G01D 5/16, G01D 5/244

(21) Anmeldenummer: **96202261.2**

(22) Anmeldetag: **12.08.1996**

(54) **Positionssensor**

Position sensor

Palpeur de position

(84) Benannte Vertragsstaaten:
**DE FR GB**

(30) Priorität: **18.08.1995 DE 19530386**

(43) Veröffentlichungstag der Anmeldung:
**26.02.1997 Patentblatt 1997/09**

(73) Patentinhaber:
• **Philips Corporate Intellectual Property GmbH 52064 Aachen (DE)**
Benannte Vertragsstaaten:
**DE**
• **Koninklijke Philips Electronics N.V. 5621 BA Eindhoven (NL)**
Benannte Vertragsstaaten:
**FR GB**

(72) Erfinder:
• **Schintag, Peter, c/o Philips Patentverwaltung GmbH 22335 Hamburg (DE)**
• **Suwald, Thomas, c/o Philips Patentverwaltung GmbH 22335 Hamburg (DE)**

(74) Vertreter: **Hartmann, Heinrich, Dipl.-Ing. et al Philips Corporate Intellectual Property GmbH, Habsburgerallee 11 52064 Aachen (DE)**

(56) Entgegenhaltungen:
EP-A- 0 257 100     EP-A- 0 543 421
US-A- 4 295 085     US-A- 5 068 529
US-A- 5 208 535     US-A- 5 291 115
US-A- 5 523 900

• **PATENT ABSTRACTS OF JAPAN vol. 013, no. 215 (P-874), 19.Mai 1989 & JP 01 032118 A (SANKYO SEIKI MFG CO LTD), 2.Februar 1989,**
• **PATENT ABSTRACTS OF JAPAN vol. 016, no. 392 (E-1251), 20.August 1992 & JP 04 127858 A (SANYO ELECTRIC CO LTD;OTHERS: 01), 28.April 1992,**
• **PATENT ABSTRACTS OF JAPAN vol. 009, no. 300 (M-433), 27.November 1985 & JP 60 138220 A (FUJITSU KK), 22.Juli 1985,**

# Beschreibung

Die Erfindung betrifft einen Positionssensor mit mindestens zwei berührungslos messenden Sensoreinheiten, deren Sensorsignale gleichartige, gegeneinander phasenversetzte Funktionen der zu messenden Position x gegenüber einem beweglichen Element sind, und mit einer Phasendetektionseinheit zur Bildung eines ein Maß für die Position x bildenden Positionssensorsignals.

Positionssensoren werden beispielsweise zur Bestimmung eines Winkels eines gegenüber den Sensoreinheiten drehbar angeordneten Elements oder zur Bestimmung der Längsposition eines gegenüber den Sensorelementen verschiebbaren Elements eingesetzt.

Ein Positionssensor zur Bestimmung eines Winkels α ist aus der EP-B 217 478 bekannt. Dort werden zwei als magnetische Filme ausgeführte Sensoreinheiten über zwei Schalter mit zwei um 90° zueinander phasenverschobenen sinusförmigen Wechselstromsignalen aus einem Sinusgenerator gespeist. Die gemessenen Ausgangsspannungen der beiden magnetischen Filme werden getrennt voneinander über jeweils einen Schalter auf einen Komparator gegeben, dessen Ausgang mit einer Signalverarbeitungseinrichtung zur Berechnung des Winkels α verbunden ist.

Meßungenauigkeiten ergeben sich bei dieser Anordnung aufgrund von Phasen- und Amplitudenfehlern der sinusförmigen Eingangssignale der Sensoreinheiten. Ein weiteres Problem ist die getrennte Führung der beiden Ausgangssignale der Sensoreinheiten. Einerseits weisen in jedem Kanal evtl. vorhandene Verstärker und Filter eine nicht exakt gleiche Verstärkung und Filtercharakteristik auf, andererseits können Fehler durch ungleiche Gewichtung der beiden Ausgangssignale bei ihrer Zusammenführung die Meßgenauigkeit verringern.

Der Erfindung liegt deshalb die Aufgabe zugrunde, einen Positionssensor der eingangs genannten Art derart auszugestalten, daß mit geringem schaltungstechnischem Aufwand derartige Fehlerquellen vermieden werden.

Diese Aufgabe wird erfindungsgemäß dadurch gelöst, daß eine durch ein Taktsignal gesteuerte Kombinationsschaltung aus den Sensorsignalen ein Meßsignal erzeugt, welches einer zyklischen Folge der Sensorsignale mit nach jedem Zyklus wechselnder Polarität entspricht, und daß die Phasendetektionseinheit das Positionssensorsignal durch Messung der Phasendifferenz zwischen dem Taktsignal und dem Meßsignal bildet. Durch eine derartige Zusammenführung der Sensorsignale direkt hinter den Ausgängen der Sensoreinheiten wird einerseits die Anzahl der benötigten Bauelemente reduziert und andererseits werden dadurch mögliche Fehlerquellen, die zu Meßungenauigkeiten führen, ausgeschlossen.

Die Erfindung beruht auf der Erkenntnis, daß das Meßsignal ein Stufensignal ist und daß durch die Höhe und die Reihenfolge der Stufen die Phasenlage eines daraus erzeugten Signals bestimmt ist. Aus dieser Phasenlage kann dann durch Phasenvergleich mit einem Referenzsignal (z.B. dem Taktsignal) auf die zu bestimmende Position x rückgeschlossen werden.

Gemäß einer bevorzugten Ausgestaltung ist vorgesehen, daß die Kombinationsschaltung die Sensoreinheiten mit einem Gleichstrom oder einer Gleichspannung speist und daß die Kombinationsschaltung eine Umschalteinheit zur Bildung des Meßsignals aus den Sensorsignalen aufweist. Die Speisung der Sensoreinheiten ist dadurch besonders einfach möglich, da alle Sensoreinheiten aus der gleichen Gleichstrom- oder Gleichspannungsquelle gespeist werden können. Auch die Bildung des Meßsignals mit Hilfe einer Umschalteinheit, die gemäß einer Weiterbildung der Erfindung von dem Taktsignal gesteuerte Multiplexer aufweist, ist dabei sehr einfach gelöst.

In einer alternativen Ausgestaltung der Erfindung ist vorgesehen, daß die Kombinationsschaltung eine Schalteinrichtung zur Speisung der Sensoreinheiten aufweist, so daß die Sensoreinheiten in zyklischer Folge mit einem Gleichstrom- oder einem Gleichspannungssignal gespeist werden, dessen Polarität sich nach jedem Zyklus ändert. Auch mit dieser Ausführung wird erreicht, daß das Meßsignal einer zyklischen Folge der Sensorsignale mit nach jedem Zyklus wechselnder Polarität entspricht, wozu die Ausgänge der Sensoreinheiten einfach zusammengeführt werden.

In einer vorteilhaften Ausgestaltung der Erfindung ist vorgesehen, daß die Phasendetektionseinheit einen Tiefpaß, einen dem Tiefpaß nachgeschalteten Komparator und einen dem Komparator nachgeschalteten Phasenkomparator aufweist. Der Tiefpaß filtert aus dem stufenförmigen Meßsignal die Grundwelle heraus. Aus dem sinusförmigen Ausgangssignal des Tiefpasses wird mittels des Komparators ein Rechtecksignal erzeugt. Der Phasenkomparator mißt die Phasendifferenz zwischen diesem Signal und dem Taktsignal und erzeugt ein dieser Phasendifferenz und damit der Position x proportionales Positionssensorsignal.

Eine besonders vorteilhafte Ausgestaltung der Erfindung sieht vor, daß die Sensoreinheiten magnetoresistive Sensoren sind, welche aus jeweils vier Brückenelementen bestehen. Hierbei ist der Aufwand für das die Sensoreinheiten beaufschlagende Magnetsystem gering. Außerdem wird durch eine geeignete Verschachtelung der Sensoreinheiten erreicht, daß die Sensoreinheiten ein gleichartiges phasenverschobenes Verhalten zeigen. Derartige Positionssensoren eignen sich besonders gut als Winkelsensoren.

Alternativ dazu ist erfindungsgemäß vorgesehen, daß die Sensoreinheiten Hallelemente oder optische Sensorelemente sind. Die Funktionsweise der Hallelemente basiert dabei auf dem Prinzip des Halleffekts. Optische Sensorelemente können beispielsweise gegeneinander verdrehte Polarisationsdetektoren sein, die die Linearpolarisierung von Licht detektieren können.

Angewendet werden kann der erfindungsgemäße Positionssensor überall da, wo die Position eines Bauteils gegenüber einer Bezugsposition oder einem weiteren Bauteil gemessen werden soll. Eine Verwendung ist beispielsweise als Winkelsensor oder als Längensensor möglich. Aufgrund der sehr hohen Meßgenauigkeit und der kostengünstigen Herstellung ist der erfindungsgemäße Sensor besonders geeignet für einen Stellungsgeber in einem Fahrzeug. Insbesondere zur Bestimmung der Winkelstellung einer Drosselklappe in einem Vergaser, beispielsweise für den Verbrennungsmotor eines Fahrzeugs, oder zur Bestimmung der Stellung des Brems- oder Gaspedals in einem Fahrzeug ist der erfindungsgemäße Sensor geeignet.

Die Erfindung wird nachfolgend anhand der Zeichnung näher erläutert. Es zeigen:

Fig. 1 ein Blockschaltbild eines erfindungsgemäßen Positionssensors mit zwei Sensoreinheiten zur Messung eines Winkels $\alpha$,

Fig. 2 Signalverläufe für zwei unterschiedliche Winkel $\alpha$ bei einem Positionssensor gemäß Fig. 1,

Fig. 3 ein Blockschaltbild einer alternativen Ausführungsform eines erfindungsgemäßen Positionssensors,

Fig. 4 die Anordnung zweier als Hallelemente ausgestalteter Sensoreinheiten zur Winkelmessung bezüglich eines Magneten,

Fig. 5 die Anwendung eines erfindungsgemäßen Positionssensors zur Bestimmung der Längsposition und

Fig. 6 die Anordnung zweier optischer Sensorelemente zur Winkelmessung.

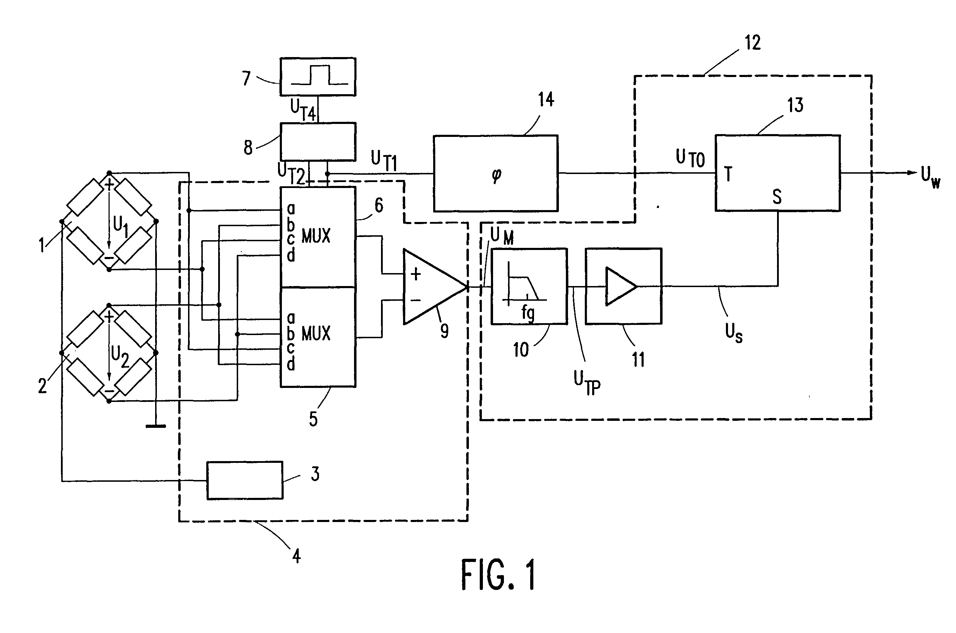

In Fig. 1 ist das Blockschaltbild eines erfindungsgemäßen Positionssensors zur Winkelmessung mit zwei magnetoresistiven Sensoren 1 und 2 gezeigt. Die Sensoren 1, 2 weisen jeweils vier Brückenelemente auf, die ineinander verschachtelt und ringförmig um einen gemeinsamen Mittelpunkt angeordnet sind. Dabei wechseln sich Brückenelemente des Sensors 1 mit Brückenelementen des Sensors 2 ab, und jedes Brückenelement ist gegenüber den beiden benachbarten Brückenelementen um 45° verdreht. Eine derartige Anordnung ist beispielsweise in der deutschen Patentanmeldung DE-A-44 08 078.6 beschrieben. Der Übersichtlichkeit halber sind die Sensoren 1, 2 in Fig. 1 nur symbolisch und getrennt voneinander dargestellt.

Die Sensoren 1, 2 werden aus der Kombinationsschaltung 4 von einer Gleichspannungsquelle 3 gespeist. Die Kombinationsschaltung 4 weist weiter zwei Multiplexer 5, 6 auf, deren Eingänge mit den mit + und - bezeichneten Ausgängen der Sensoren 1, 2 verbunden sind. Die Multiplexer 5, 6 werden von den Taktsignalen $U_{T1}$ und $U_{T2}$ gesteuert, die von dem Zähler 8 aus dem Taktsignal $U_{T4}$ des Taktgenerators 7 gebildet werden. Die Ausgänge der Multiplexer 5, 6 sind mit dem Eingang eines Differenzverstärkers 9 verbunden. Der Kombinationsschaltung 4 nachgeschaltet ist eine Phasendetektionseinheit 12, die am Eingang einen auf die Frequenz des Taktsignals $U_{T1}$ abgestimmten Tiefpaß 10, einen dem Tiefpaß 10 nachgeschalteten Komparator 11 sowie einen dem Komparator 11 nachgeschalteten Phasenkomparator 13 enthält. An einem Takteingang T des Phasenkomparators 13 liegt außerdem das Taktsignal $U_{T0}$ an, das dem phasenverschobenen Taktsignal $U_{T1}$ entspricht. Zur Phasenverschiebung und damit zur Nullpunktfestlegung des Taktsignals $U_{T1}$ ist deshalb dem Phasenkomparator 13 ein Phasenschieber 14 vorgeschaltet, an dem das Taktsignal $U_{T1}$ anliegt.

Im folgenden wird die Funktionsweise der Schaltung näher erläutert. Die beiden magnetoresistiven Sensoren 1, 2 werden mit demselben Gleichspannungssignal an ihren Eingängen gespeist. Aufgrund der Anordnung der Sensoren 1, 2 mit um 45° zueinander verdreht angeordneten Brückenelementen sind die Sensorsignale $U_1$ und $U_2$ an den Ausgängen der Sensoren 1, 2 um 90° zueinander phasenverschoben. Es gilt: $U_1 = U_0 \cos (2\alpha)$ und $U_2 = U_0 \sin (2\alpha)$. $U_0$ ist dabei eine konstante Größe und $\alpha$ der zu messende Winkel zwischen einem drehbar bezüglich der Sensoren 1, 2 angeordneten Bauteil mit einem Magneten und einer Bezugsachse. Die Sensorsignale $U_1$ und $U_2$ werden von den beiden Multiplexern 5, 6, die jeweils vier Eingänge und einen Ausgang aufweisen, derart auf den Eingang des Differenzverstärkers 9 geschaltet, daß sich am Ausgang des Differenzverstärkers 9 als Meßsignal $U_M$ ein periodische Stufensignal ergibt. Dazu wird in der ersten Teilperiode ($U_{T1} = U_{T2} = 1$) das Sensorsignal $+U_1$ von den Eingängen a der Multiplexer 5, 6 auf den Ausgang durchgeschaltet. In der zweiten Teilperiode ($U_{T1} = 1$, $U_{T2} = 0$) wird das Signal $+U_2$ (Eingänge b) durchgeschaltet, in der dritten Teilperiode ($U_{T1} = 0$, $U_{T2} = 1$) das Signal $-U_1$ (Eingänge c) und in der vierten Teilperiode ($U_{T1} = U_{T2} = 0$) das Signal $-U_2$ (Eingänge d). Nach einer Verstärkung durch den Differenzverstärker 9 ergibt sich dann das Meßsignal $U_M$ als Stufensignal, das einer zyklischen Folge der Sensorsignale $U_1$, $U_2$ mit jedem Zyklus wechselnder Polarität entspricht.

Aus diesem Meßsignal $U_M$ filtert der Tiefpaß 10, dessen Grenzfrequenz der Frequenz des Taktsignals $U_{T1}$ entspricht, die Grundwelle heraus. Die Phasenlage des sinusförmigen Ausgangssignals $U_{TP}$ des Tiefpasses 10 ist eindeutig durch die Höhe der Stufen und die Reihenfolge der Stufen des Meßsignals $U_M$ bestimmt. Das sinusförmige Ausgangssignal $U_{TP}$ wird vom Komparator 11 in ein Rechtecksignal $U_S$ mit derselben Frequenz und Phasenlage umgewandelt und anschließend auf den Signaleingang S des Phasenkomparators 13 gegeben. Der Phasenkomparator 13 vergleicht die Phasenlage dieses Rechtecksignals $U_S$ mit der Phasenlage des an seinem Takteingang T anliegenden Taktsignals $U_{T0}$ und erzeugt an seinem Ausgang ein direkt dem Winkel $\alpha$ proportionales Winkelsensorsignal $U_W$. Dieses Positionssensorsignal $U_W$ kann beispielsweise ein pulsweitenmoduliertes Signal, eine Spannung, ein Strom, eine Frequenz oder ein anderes Signal sein, das eindeutig auf den Winkel $\alpha$ rückschließen läßt und mit diesem in linearem Zusammenhang steht.

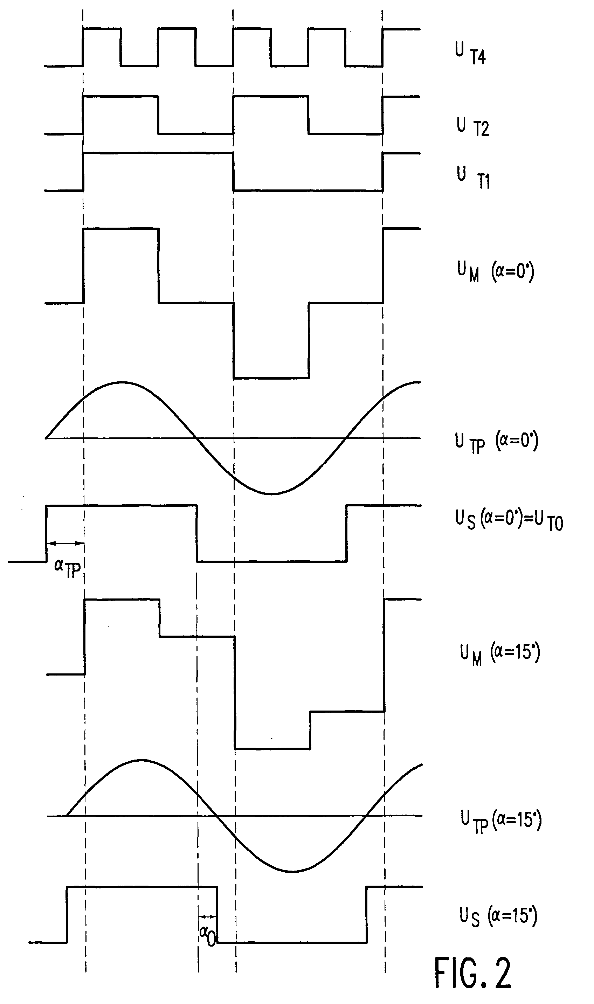

In Fig. 2 sind bei einem als Winkelsensor verwendeten Positionssensor gemäß Fig. 1 auftretende Signalverläufe für zwei unterschiedliche Winkel $\alpha$ dargestellt. Zunächst sind das Taktsignal $U_{T4}$ des Taktgenerators 7 und die daraus von dem Zähler 8 abgeteilten Taktsignale $U_{T2}$ und $U_{T1}$ gezeigt. Darunter sind zunächst für den Winkel $\alpha = 0°$ und danach für den Winkel $\alpha = 15°$ jeweils die Ausgangssignale der Kombinationsschaltung 4, des Tiefpasses 10 und des Komparators 11 dargestellt, wobei jeweils für die vertikale Achse keine Skaleneinteilung eingezeichnet ist.

Für den Winkel $\alpha = 0°$ gilt: $U_1 = U_0 \cos 0° = U_0$ und $U_1 = U_0 \sin 0° = 0$. Daher ergibt sich für das Ausgangssignal der Kombinationsschaltung 4 (= Meßsignal $U_M$), das einem Stufensignal mit den Stufen $+U_1$, $+U_2$, $-U_1$, $-U_2$ entspricht, der gezeigte und mit $U_M$ ($\alpha = 0°$) bezeichnete Signalverlauf. Das Ausgangssignal $U_{TP}$ des Tiefpasses 10 entspricht der Grundwelle des Meßsignals $U_M$. Der Komparator 11 wandelt das Tiefpaßausgangssignal $U_{TP}$ in ein Rechtecksignal $U_S$ derselben Frequenz und Phasenlage, das auf den Signaleingang S des Phasenkomparators 13 gegeben wird. Der Tiefpaß 10 verursacht eine Phasenverschiebung um den Winkel $\alpha_{TP}$, die beim Phasenvergleich im Phasenkomparator 13 berücksichtigt werden muß. Deshalb wird auf den Takteingang T des Phasenkomparators 13 ein um den Winkel $\alpha_{TP}$ vom Phasenschieber 14 verschobenes Taktsignal $U_{T0}$ gegeben, das bei einem zu messenden Winkel $\alpha = 0°$ dem Signal $U_s$ entspricht.

Für den Winkel $\alpha = 15°$ gilt $U_1 = \sqrt{3}/2\ U_0$ und $U_2 = 1/2\ U_0$. Es ergeben sich analog wie für den Winkel $\alpha = 0°$ die Signale $U_M$, $U_{TP}$ und $U_S$. Das Signal $U_S$ weist jetzt eine Phasenverschiebung $\alpha_0$ gegenüber dem Taktsignal $U_{T0}$ auf, aus der vom Phasenkomparator 13 ein Positionssensorsignal $U_W$ (nicht dargestellt) erzeugt wird, das eindeutig die Größe des Winkels $\alpha$ bestimmt.

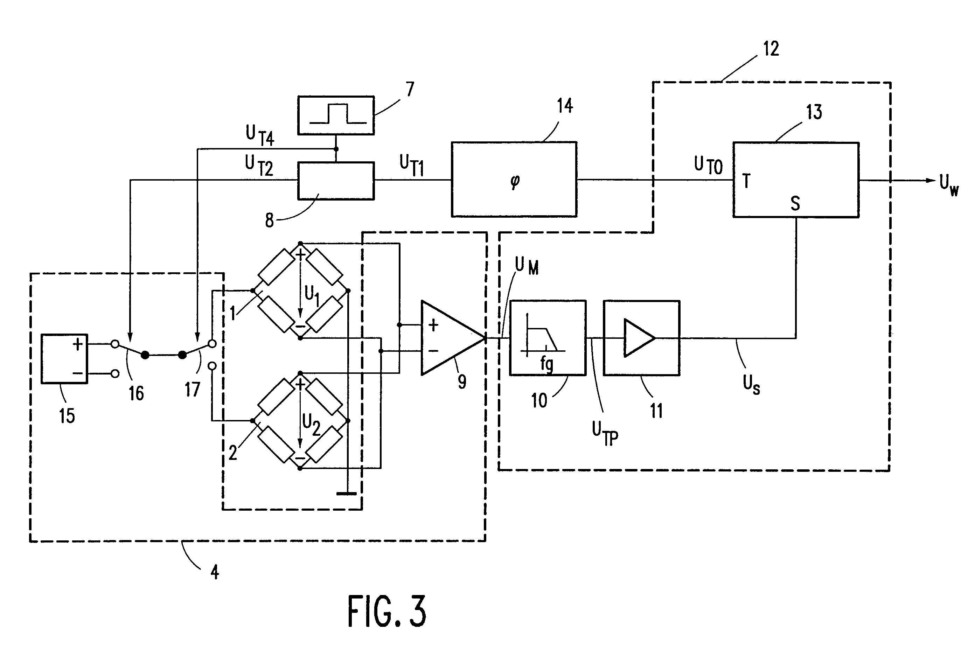

In Fig. 3 ist eine alternative Ausführungsform eines erfindungsgemäßen Positionssensors dargestellt. Dabei ist die Kombinationsschaltung 4 anders ausgeführt. Die Sensoreinheiten 1 und 2 werden über zwei Schaltelemente 16, 17 von einer Gleichspannungsquelle 15 gespeist. Der Schalter 16 wird dabei vom Taktsignal $U_{T2}$ gesteuert, das von dem Zähler 8 aus dem Taktsignal $U_{T4}$ erzeugt wird und die halbe Frequenz des Taktsignals $U_{T4}$ aufweist. Der Schalter 17 wird von dem Taktsignal $U_{T4}$ gesteuert.

Die taktgesteuerten Schalter 16, 17 bewirken, daß in der ersten von vier Teilperioden am Sensor 1 eine positive Gleichspannung, in der zweiten Teilperiode am Sensor 2 eine positive Gleichspannung, in der dritten Teilperiode am Sensor 1 eine negative Gleichspannung und in der vierten Teilperiode am Sensor 2 eine negative Gleichspannung anliegen. Der zweite Eingangspunkt der beiden Sensoren 1, 2 liegt ständig auf Masse. Der erste Eingangspunkt der Sensoren 1, 2 liegt ebenfalls in den Teilperioden, in denen er nicht an die Gleichspannungsversorgung angeschlossen ist, auf Masse. Die mit + bezeichneten Ausgangspunkte der Sensoren 1, 2 werden zusammengeführt auf den positiven Eingang des Differenzverstärkers 9 gegeben, die mit - bezeichneten Ausgangspunkte der Sensoren 1, 2 auf den negativen Eingang des Differenzverstärkers 9. Diese einfache Zusammenschaltung ist möglich, da der Sensor 1 nur in den Teilperioden 1 und 3 ein Ausgangssignal liefert, der Sensor 2 nur in den Teilperioden 2 und 4.

Mit dieser ebenfalls sehr einfachen Ausführung der Kombinationsschaltung 4 ergibt sich am Ausgang der Kombinationsschaltung 4 das Meßsignal $U_M$, das, wie im Zusammenhang mit Fig. 1 und 2 beschrieben ist, weiterverarbeitet werden kann.

Eine weitere, nicht dargestellte Ausführungsform kann aus einer Kombination der in Fig. 1 und Fig. 3 gezeigten Ausführungsformen bestehen. Die Eingänge der Sensoren 1, 2 können dabei über einen Schalter wechselweise mit einer positiven Gleichspannung gespeist werden. Die Ausgänge der Sensoren 1, 2 werden, wie in Fig. 3 gezeigt, zusammengeführt und auf die Eingänge eines Differenzverstärkers 9 gegeben, bei dem die Vorzeichen der Eingangsverstärkung nach jeder zweiten Teilperiode (von vier Teilperioden) beispielsweise mittels eines Multiplexers vertauscht werden. Dadurch wird wiederum dasselbe Meßsignal $U_M$ wie mit den Ausführungsformen gemäß Fig. 1 und Fig. 3 erreicht.

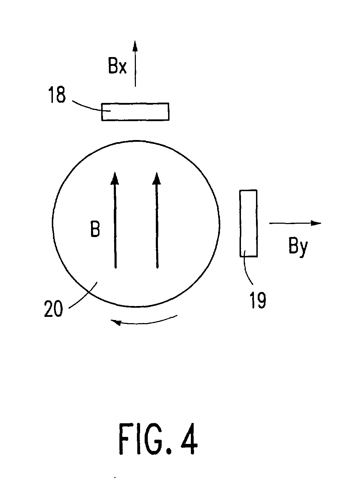

In Fig. 4 ist die Anordnung zweier als Hallelemente 18, 19 ausgeführter Sensoreinheiten bezüglich eines in der Zeichenebene drehbar angeordneten Magneten 20 gezeigt. Der Magnet 20 erzeugt im Bereich der Hallsensoren 18, 19 ein - homogenes, in Pfeilrichtung B gerichtetes Magnetfeld, von dem der Hallsensor 18 die Komponente $B_x$, der Hallsensor 19 die Komponente $B_y$ erfaßt. Die Hallsensoren 18, 19 werden statt mit einer Spannung mit Gleichstrom gespeist, ansonsten erfolgt die Signalverarbeitung in gleicher Weise, wie im Zusammenhang mit den magnetoresistiven Sensoren bei den Fig. 1 bis 3 beschrieben ist.

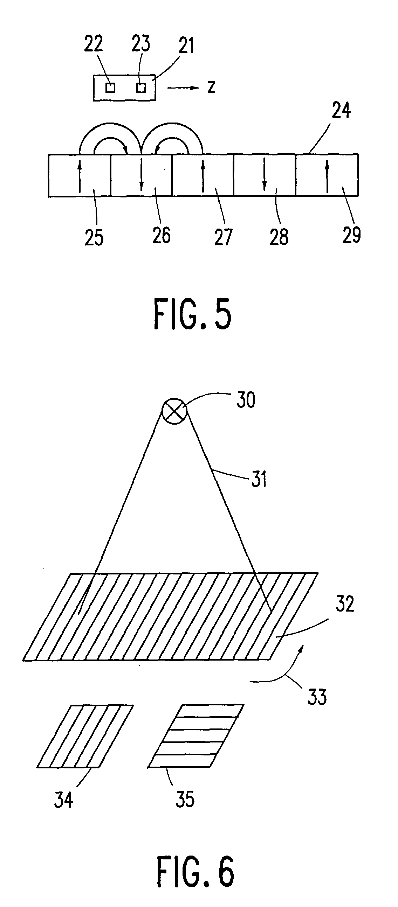

In Fig. 5 ist die Anordnung eines erfindungsgemäßen Positionssensors zur Bestimmung der Längsposition z gezeigt. Mit 21 ist der als Längensensor ausgeführte Positionssensor bezeichnet, der die Sensoreinheiten 22 und 23 enthält. De Längensensor 21 ist in der mit z bezeichneten Richtung gegenüber dem magnetisch kodierten Maßstab 24 verschiebbar. Der Maßstab 24 weist mehrere nebeneinanderliegende Magnetbereiche 25 bis 29 auf, wobei die Magnetfeldvektoren direkt benachbarter Bereiche, beispielsweise 25 und 26 jeweils entgegengesetzt gerichtet sind. Dadurch ergibt sich außerhalb des Maßstabes 24 das durch einige Magnetfeldlinien angedeutete Magnetfeld. Die Sensoreinheiten 22 und 23 erfassen von diesem Magnetfeld den in z-Richtung gerichteten Anteil. Die Sensoreinheiten 22, 23 sind derart beabstandet, daß einer dieser beiden Sensoren ein Maximum der in z-Richtung gerichteten Anteile des Magnetfeldes erfaßt, wenn der andere der beiden Sensoren gerade eine Nullstelle erfaßt. Die gemessenen Sensorsignale werden, wie bereits weiter oben beschrieben, verarbeitet, wodurch sich letztlich die Position z des Längensensors 21 gegenüber dem Maßstab 24 bestimmen läßt.

Die Erfindung läßt sich auch mit optischen Sensoren, deren Anordnung in Fig. 6 gezeigt ist, verwirklichen. Von einer Lichtquelle 30 ausgehendes polarisiertes Licht 31 wird von einem Polarisator 32 linear polarisiert. Darunter befinden sich zwei optische Sensorelemente 34 und 35, die jeweils in einer speziellen Richtung (angedeutet durch die Schraffierung der Sensorelemente 34, 35) polarisiertes Licht detektieren können. Die beiden Sensorelemente 34 und 35 sind dabei um 90° zueinander verdreht. Der Polarisator 32 ist in der zu den Sensorelementen 34, 35 parallelen Ebene - wie mit dem Pfeil 33 angedeutet ist - drehbar. Mit dieser Anordnung ist eine Messung des Winkels des Polarisators 32 gegenüber den Sensorelementen 34, 35 möglich.

Bei den in Fig. 1 und 3 gezeigten Ausführungen kann zusätzlich sowohl am Takteingang T als auch am Signaleingang S des Phasenkomparators 13 jeweils ein Frequenzteiler vorgesehen sein, mit dem die Frequenz der Signale $U_S$ und $U_{T0}$ herabgesetzt werden kann. Dies vermindert einerseits die Störabstrahlung des Sensors, andererseits wird durch Mittelung über mehrere Perioden die Meßgenauigkeit erhöht.

Es sind außerdem noch weitere Ausführungsformen der Kombinationsschaltung denkbar, mit denen das gewünschte Maßsignal $U_M$ erzeugt werden kann. Auch für die Reihenfolge der Stufen des Meßsignals $U_M$ sind andere Lösungen als $+U_1$, $+U_2$, $-U_1$, $-U_2$ denkbar. Die Erfindung ist auch nicht auf Positionssensoren mit genau zwei Sensoreinheiten beschränkt, auch mit einem Positionssensor mit mehr als zwei Sensoreinheiten ist eine präzise Positionsmessung möglich, wobei die eingangs genannten Fehlerquellen vermieden werden können.

Für die Erfindung spielt keine Rolle, wie die einzelnen Bauteile, wie beispielsweise die Schaltelemente, der Komparator, der Phasenkomparator usw., realisiert sind. Bevorzugt werden in der Praxis Sensoren verwendet, deren Ausgangssignal in sinusförmigem Zusammenhang mit der zu messenden Position steht. Es ist jedoch auch die Verwendung von Sensoren mit anderem funktionellem Zusammenhang denkbar, wobei die Ausgangssignale dann beispielsweise mit Hilfe einer Umsetztabelle auf einen sinusförmigen Verlauf umgesetzt werden.

Mit dem erfindungsgemäßen Positionssensor ist bei hoher Meßgenauigkeit die Messung einer Position x möglich. Aufgrund der kostengünstigen Herstellung wegen des geringen schaltungstechnischen Aufwandes und seiner hohen Genauigkeit eignet sich der erfindungsgemäße Positionssensor insbesondere für einen Stellungsgeber, wie insbesondere einen Drosselklappen-Stellungsgeber oder Pedal-Stellungsgeber für ein Fahrzeug. Weitere Anwendungen wären ein Schalthebel-Stellungsgeber oder ein Neigungssensor für ein Fahrwerk.

## Patentansprüche

1. Positionssensor mit mindestens zwei berührungslos messenden Sensoreinheiten (1, 2), deren Sensorssignale ($U_1$, $U_2$) gleichartige, gegeneinander phasenversetzte Funktionen der zu messenden Position x gegenüber einem beweglichen Element sind, und mit einer Phasendetektionseinheit (12) zur Bildung eines ein Maß für die Position x bildenden Positionssensorsignals ($U_W$),
   **dadurch gekennzeichnet, daß** eine durch ein Taktsignal ($U_{T1}$, $U_{T2}$) gesteuerte Kombinationsschaltung (4) aus den Sensorsignalen ($U_1$, $U_2$) ein Meßsignal ($U_M$) erzeugt, welches einer zyklischen Folge der Sensorsignale ($U_1$, $U_2$) mit nach jedem Zyklus wechselnder Polarität entspricht, und daß die Phasendetektionseinheit (12) das Positionssensorsignal ($U_W$) durch Messung der Phasendifferenz zwischen dem Taktsignal ($U_{T1}$, $U_{T2}$) und dem Meßsignal ($U_M$) bildet.

2. Positionssensor nach Anspruch 1,
   **dadurch gekennzeichnet, daß** die Kombinationsschaltung (4) die Sensoreinheiten (1, 2) mit einem Gleichstrom oder einer Gleichspannung speist und daß die Kombinationsschaltung (4) eine Umschalteinheit (5, 6) zur Bildung des Meßsignals ($U_M$) aus den Sensorsignalen ($U_1$, $U_2$) aufweist.

3. Positionssensor nach Anspruch 2,
   **dadurch gekennzeichnet, daß** die Umschalteinheit (5, 6) von dem Taktsignal ($U_{T1}$, $U_{T2}$) gesteuerte Multiplexer aufweist.

4. Positionssensor nach Anspruch 1,
   **dadurch gekennzeichnet, daß** die Kombinationsschaltung (4) eine Schalteinrichtung zur Speisung der Sensoreinheiten (1, 2) aufweist, so daß die Sensoreinheiten (1, 2) in zyklischer Folge mit einem Gleichstrom- oder einem Gleichspannungssignal gespeist werden, dessen Polarität sich nach jedem Zyklus ändert.

5. Positionssensor nach einem der Ansprüche 1 bis 4,

**dadurch gekennzeichnet, daß** die Phasendetektionseinheit (12) einen Tiefpaß (10), einen dem Tiefpaß (10) nachgeschalteten Komparator (11) und einen dem Komparator (11) nachgeschalteten Phasenkomparator (13) aufweist.

6. Positionssensor nach einem der Ansprüche 1 bis 5, **dadurch gekennzeichnet, daß** die Sensoreinheiten (1, 2) magnetoresistive Sensoren sind, welche aus jeweils vier Brückenelementen bestehen.

7. Positionssensor nach einem der Ansprüche 1 bis 5, **dadurch gekennzeichnet, daß** die Sensoreinheiten (1, 2) Hallelemente (18, 19) oder optische Sensorelemente (35, 36) sind.

8. Verwendung des Positionssensor nach einem der Ansprüche 1 bis 7 als Winkelsensor oder als Längensensor.

9. Vergaser, insbesondere für einen Verbrennungsmotor eines Fahrzeugs, mit einer Drosselklappe und einem Drosselklappen-Stellungsgeber sowie einem Positionssensor zur Bestimmung der Winkelstellung der Drosselklappe, wobei der Positionssensor ein Sensor nach einem der Ansprüche 1 bis 7 ist.

10. Brems- und/oder Gaspedaleinheit für ein Fahrzeug mit einer Sensoreinheit zur Bestimmung der Stellung des Brems- und/oder Gaspedals, wobei die Sensoreinheit einen Positionssensor nach einem der Ansprüche 1 bis 7 aufweist.

11. Fahrzeug mit einem Vergaser nach Anspruch 9 oder einer Brems- und/oder Gaspedaleinheit nach Anspruch 10.

**Claims**

1. A position sensor including at least two sensor units (1, 2) which measure in a contactless manner and whose sensor signals ($U_1$, $U_2$) constitute similar, mutually phase-shifted functions of the position x to be measured relative to a movable element, and also including a phase detection unit (12) for forming a position sensor signal ($U_w$) which is a measure of the position x, **characterized in that** a combination circuit (4) which is controlled by a clock signal ($U_{T1}$, $U_{T2}$) generates from the sensor signals ($U_1$, $U_2$) a measuring signal ($U_M$) which corresponds to a cyclic order of the sensor signals ($U_1$, $U_2$) with a polarity which changes after each cycle, and that the phase detection unit (12) forms the position sensor signal ($U_w$) by measuring the phase difference between the clock signal ($U_{T1}$, $U_{T2}$) and the measuring signal ($U_M$).

2. A position sensor as claimed in Claim 1, **characterized in that** the combination circuit (4) supplies the sensor units (1, 2) with a direct current or a direct voltage, and that the combination circuit (4) includes a switching unit (5, 6) for forming the measuring signal ($U_M$) from the sensor signals ($U_1$, $U_2$).

3. A position sensor as claimed in Claim 2, **characterized in that** the switching unit (5, 6) includes multiplexers which are controlled by the clock signal ($U_{T1}$, $U_{T2}$).

4. A position sensor as claimed in Claim 1, **characterized in that** the combination circuit (4) includes a switching device for feeding the sensor units (1, 2) in such a manner that the sensor units (1, 2) receive, in a cyclic order, a direct current or a direct voltage signal whose polarity changes after each cycle.

5. A position sensor as claimed in one of the Claims 1 to 4, **characterized in that** the phase detection unit (12) includes a low-pass filter (10), a comparator (11) which succeeds the low-pass filter (10), and a phase comparator (13) which succeeds the comparator (11).

6. A position sensor as claimed in one of the Claims 1 to 5, **characterized in that** the sensor units (1, 2) are magnetoresistive sensors, each of which consists of four bridge elements.

7. A position sensor as claimed in one of the Claims 1 to 5, **characterized in that** the sensor units (1, 2) are Hall elements (18, 19) or optical sensor elements (35, 36).

8. The use of the position sensor as claimed in one of the Claims 1 to 7 as an angle sensor or a length sensor.

9. A carburator, notably for a combustion engine of a vehicle, including a throttle valve and a throttle valve position transducer as well as a position sensor for determining the angular position of the throttle valve, the position sensor being a sensor as claimed in one of the Claims 1 to 7.

10. A brake and/or gas pedal unit for a vehicle, including a position sensor for determining the position of the brake and/or gas pedal, the sensor unit including a position sensor as claimed in one of the claims 1 to 7.

**11.** A vehicle including a carburator as claimed in Claim 9 or a brake and/or gas pedal unit as claimed in Claim 10.

**Revendications**

**1.** Palpeur de position avec au moins deux unités de palpeur (1, 2) mesurant sans contact dont les signaux de palpeurs ($U_1$, $U_2$) sont des fonctions similaires déphasées réciproquement de la position x à mesurer par rapport à un élément mobile et avec une unité de détection de phase (12) en vue de la formation d'un signal de palpeur de position ($U_W$) formant une mesure de la position x,
**caractérisé en ce qu'**un circuit de combinaison (4) commandé par un signal de rythme ($U_{T1}$, $U_{T2}$) produit, à partir des signaux de palpeur ($U_1$, $U_2$), un signal de mesure ($U_M$) qui correspond à une séquence cyclique des signaux de palpeur ($U_1$, $U_2$) avec une polarité changeant à chaque cycle et que l'unité de détection de phase (12) forme le signal de palpeur de position ($U_w$) par mesure de la différence de phase entre le signal de rythme ($U_{T1}$, $U_{T2}$) et le signal de mesure ($U_M$).

**2.** Palpeur de position selon la revendication 1,
**caractérisé en ce que** le circuit de combinaison (4) alimente les unités de palpeur (1, 2) en un courant continu ou en une tension continue et que le circuit de combinaison (4) présente une unité de commutation (5, 6) en vue de la formation du signal de mesure ($U_M$) à partir des signaux de palpeur ($U_1$, $U_2$).

**3.** Palpeur de position selon la revendication 2,
**caractérisé en ce que** l'unité de commutation (5, 6) présente un multiplexeur commandé par le signal de rythme ($U_{T1}$, $U_{T2}$).

**4.** Palpeur de position selon la revendication 1,
**caractérisé en ce que** le circuit de combinaison (4) présente un dispositif de commutation en vue de l'alimentation des unités de palpeur (1, 2) de telle sorte que les unités de palpeur (1, 2) soient alimentées dans une séquence cyclique en un signal de courant continu ou en un signal de tension continue dont la polarité change après chaque cycle.

**5.** Palpeur de position selon l'une des revendications 1 à 4,
**caractérisé en ce que** l'unité de détection de phase (12) présente un filtre passe-bas (10) à un comparateur (11) monté en aval du filtre passe-bas (10) et un comparateur de phases (13) monté en aval du comparateur (11).

**6.** Palpeur de position selon l'une des revendications 1 à 5,
**caractérisé en ce que** les unités de palpeur (1, 2) sont des palpeurs magnétorésistifs qui se composent respectivement de quatre éléments de pont.

**7.** Palpeur de position selon l'une des revendications 1 à 5,
**caractérisé en ce que** les unités de palpeur (1, 2) sont des éléments de Hall (18, 19) des éléments de palpeur optiques (35, 36).

**8.** Mise en oeuvre du palpeur de position selon l'une des revendications 1 à 7 comme palpeur angulaire ou palpeur de longueur.

**9.** Carburateur, en particulier pour un moteur à combustion d'un véhicule, avec une soupape d'étranglement et un capteur de position des soupapes d'étranglement ainsi qu'un palpeur de position en vue de la détermination de la position angulaire de la soupape d'étranglement, le palpeur de position étant un palpeur selon l'une des revendications 1 à 7.

**10.** Unité de pédale de frein et/ou d'accélérateur pour un véhicule avec une unité de palpeur en vue de la détermination de la position de la pédale de frein et/ou de la pédale d'accélérateur, l'unité de palpeur présentant un palpeur de position selon l'une des revendications 1 à 7.

**11.** Véhicule avec un carburateur selon la revendication 9 ou une unité de pédale de frein et/ou de pédale d'accélérateur selon la revendication 10.

FIG. 1

EP 0 759 535 B1

FIG. 2

$U_{T4}$

$U_{T2}$

$U_{T1}$

$U_M \ (\alpha=0^\circ)$

$U_{TP} \ (\alpha=0^\circ)$

$U_S \ (\alpha=0^\circ)=U_{T0}$

$\alpha_{TP}$

$U_M \ (\alpha=15^\circ)$

$U_{TP} \ (\alpha=15^\circ)$

$U_S \ (\alpha=15^\circ)$

$\alpha_0$

FIG. 3

EP 0 759 535 B1

FIG. 4

FIG. 5

FIG. 6